# EUROPEAN PATENT APPLICATION

(11) **EP 4 366 299 A1**
(43) Date of publication of application: **08.05.2024**
(21) Application number: 22833311.8
(22) Date of filing: 30.06.2022
(51) Int. Cl.: H04N 7/18, G08B 25/00

(54) **CAMERA AND SYSTEM**

(30) Priority: 30.06.2021 JP 2021109753
(71) Applicant: Asterisk, Inc., Osaka-shi, Osaka 532-0011 (JP)
(72) Inventor: SUZUKI, Noriyuki, Osaka-shi, Osaka 532- 0011 (JP); SETSU, Bunpo, Osaka-shi, Osaka 532- 0011 (JP)
(74) Representative: TBK
(86) International application number: PCT/JP2022/026397
(87) International publication number: WO 2023/277165

(57) **Abstract**

Provided are a camera and a system capable of detecting an object for any portion of an image taken and generated. A system includes: a surveillance camera 110; and an information terminal 120 that is communicable with the surveillance camera 110. The information terminal 120 includes a designation unit 22 that is configured to designate a detection area, in which a person P is to be detected, for the surveillance camera 110 in an imaging-area image acquired from the surveillance camera 110. The surveillance camera 110 includes: a detection unit 13 configured to detect an object in the detection area in a generated image; and a transmission unit 14 configured to transmit a notification indicating a detection of the object to another device.

## Description

### Technical Field

The present invention relates to cameras, and systems including the camera.

### Background Art

Conventional systems including a camera and a server communicably connected with the camera via a network are known. The systems are configured so that the server analyzes an image generated by the camera. For instance, the surveillance system described in Patent Literature 1 has a plurality of surveillance cameras and a central server with an image recognition unit. The image recognition unit analyzes images obtained from the surveillance cameras and detects the number of people present in the area where each surveillance camera is installed.

Patent Literature 2 describes another example, which is a surveillance system that does not have a server and is made up of a plurality of surveillance cameras. These surveillance cameras each take an image of the area assigned thereto, and generate the image of the area. These surveillance cameras also extract an object in the image and track the extracted object. The surveillance cameras share their information on tracking, whereby the system is capable of tracking an object within a wide area.

### Citation List

### Patent Literature

Patent Literature 1: JP 2011-134004 A
Patent Literature 2: JP 5686435 B

### Summary of Invention

### Technical Problem

In the system of Patent Literature 1, the image recognition unit of the server analyzes the image taken by each surveillance camera, meaning that as the number of installed surveillance cameras increases, the processing load on the server increases. In this regard, the system of Patent Literature 2 detects an object with each surveillance camera, thus not increasing the processing load with an increase in the number of surveillance cameras installed. Each of the surveillance cameras in Patent Literature 2, however, has to always perform detection processing on the entire area of the image taken and generated.

The present invention aims to provide a camera and a system capable of detecting an object for any portion of an image taken and generated.

### Solution to Problem

To achieve the above aim, a system according to the present invention includes: a camera; and a terminal that is communicable with the camera, the terminal including a designation unit configured to designate a detection area, in which an object is to be detected, for the camera in an image acquired from the camera, the camera including: a detection unit configured to detect an object in the detection area in a generated image; and a transmission unit configured to transmit a notification indicating a detection of the object to another device.

The other device operates in accordance with a notification received from the camera.

When another condition different from a detection of the object is met, the camera does not send the notification.

To achieve the above aim, a camera according to the present invention includes: an imaging unit that generates an image; a setting unit having a detection area, in which an object is to be detected, in the generated image, the detection area being set by a communicable terminal; a detection unit configured to detect an object in the detection area in the generated image; and a transmission unit configured to transmit a notification indicating a detection of the object to another device.

### Advantageous Effects of Invention

The present invention enables detection of an object for any portion of an image taken and generated.

### Brief Description of Drawings

Fig. 1 is a schematic diagram of an alarm system according to a first embodiment of the present invention.
Fig. 2A shows a hardware configuration of the surveillance camera included in the alarm system. Fig. 2B shows a hardware configuration of the alarm included in the alarm system.
Fig. 3 is a functional block diagram of the alarm system.
Fig. 4 is a flowchart of the process for the surveillance camera.
Fig. 5 is a flowchart of the setting process for the surveillance camera and the information terminal included in the alarm system.
Fig. 6 is a flowchart of the monitoring process by the surveillance camera.

### Description of Embodiments

### [First Embodiment]

Referring to the drawings, the following describes an alarm system 100 according to a first embodiment of the present invention.

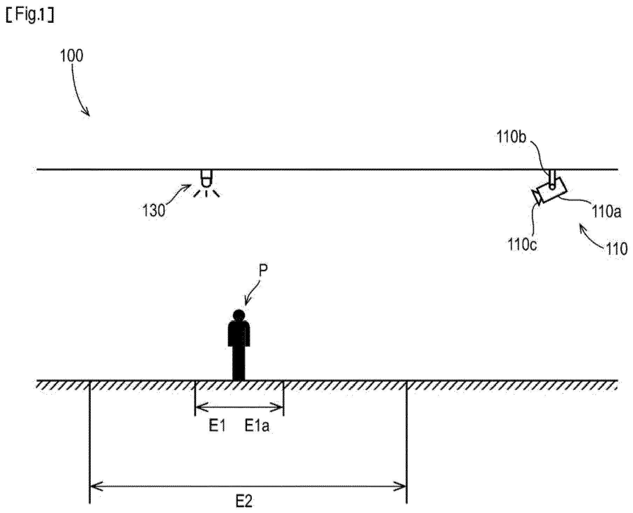

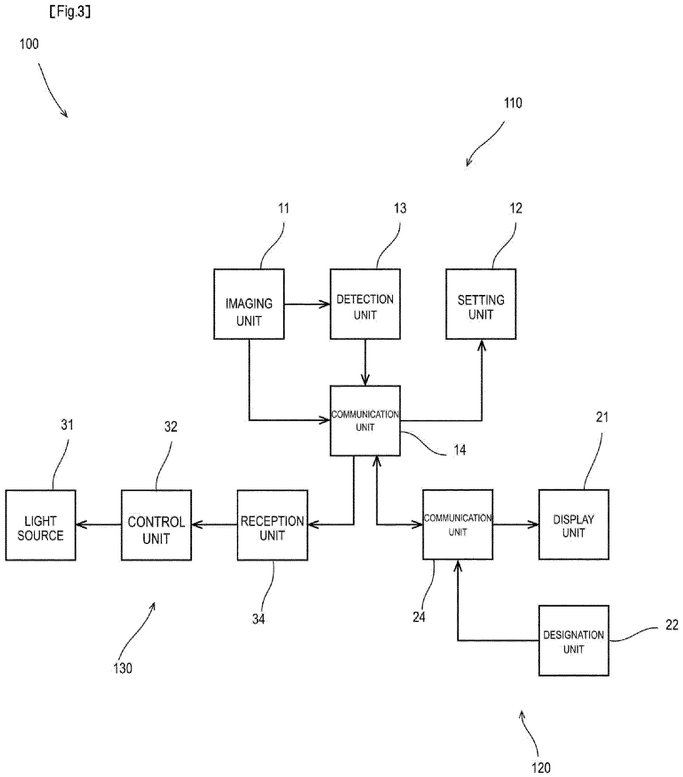

The alarm system 100 according to the first embodiment issues an alarm when an object such as a person or other things exists in a specific area. For instance, as shown in Fig. 1, the system is used to issue an alarm for a person P when the person P enters an area E1a, where the entry is prohibited (hereinafter referred to as "off-limits area E1a"). The alarm system 100 includes: a surveillance camera 110 (camera) that monitors the off-limits area E1a; an information terminal 120 (terminal) (Fig. 3) that sets the off-limits area E1a; and an alarm 130 (another device) that issues an alarm. The alarm system 100 is configured so that the alarm 130 and information terminal 120 are communicable with the surveillance camera 110 via a network.

The surveillance camera 110 detects the presence of an object in the area E1 (hereinafter called "detection area E1") where objects are to be detected. The surveillance camera 110 of the present embodiment is a camera for fixed-point with the off-limits area E1a as the detection area E1. For instance, this surveillance camera 110 is installed on the nearby ceiling where the camera can take an image of the imaging area E2 including the off-limits area E1a so that the presence of a person P is detectable in the off-limits area E1a.

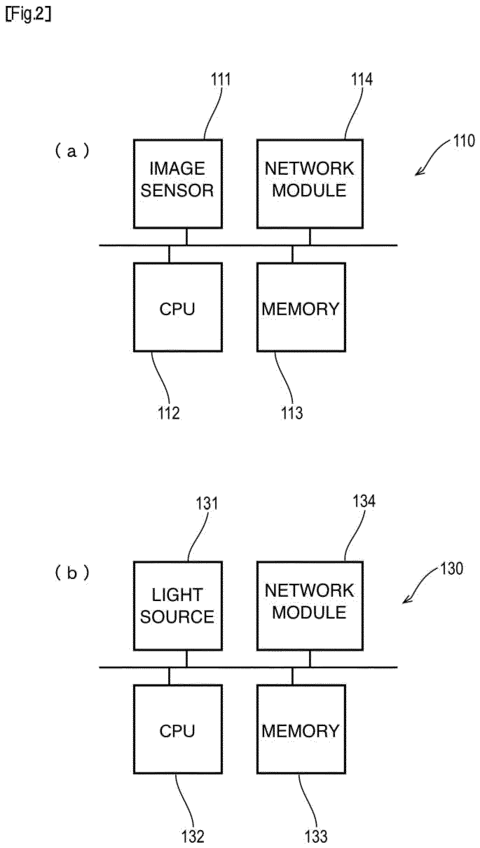

As shown in Fig. 2, the surveillance camera 110 includes an image sensor 111 that functions as an imaging unit 11 (Fig. 3) that takes an image of the imaging area E2 including the detection area E1. The image sensor 111 takes an image of the imaging area E2 and generates an image of the imaging area E2 (hereinafter called "imaging-area image"). The imaging-area image generated by the image sensor 111 is input to the CPU 112 that the surveillance camera 110 includes.

The CPU 112 of the surveillance camera 110 executes a program stored in a memory 113, thus controlling the image sensor 111. The CPU 112 then cooperates with the information terminal 120, thus functioning as a setting unit 12 to set the detection area E1 based on the imaging-area image acquired from the image sensor 111. This CPU 112 also analyzes the acquired image-area image each time it acquires the image-area image from the image sensor 111, thus functioning as a detection unit 13 that detects a person P in the detection area E1. The CPU 112 is connected to a network module 114.

The network module 114 of the surveillance camera 110 functions as a transmission unit that transmits an imaging-area image to the information terminal 120, and a reception unit that receives information on the detection area E1 from the information terminal 120. The network module 114 also functions as the transmission unit that transmits a notification to the alarm 130 in response to a detection of a person P in the detection area E1. These transmission unit and reception unit are collectively called a communication unit 14.

As shown in Fig. 1, the surveillance camera 110 has a body 110a that houses a board, on which electronic components such as the CPU 112, memory 113, and network module 114 are mounted. This body 110a is installed via a support arm 110b. The body 110a comes with an imaging unit 110c on the front face, and the imaging unit 110c houses the image sensor 111 as described above. The imaging unit 110c includes a lens that forms an image of the imaging area E2 on the light-receiving face of the image sensor 111.

The information terminal 120 is a known laptop or desktop computer. As shown in Fig. 3, the information terminal 120 includes: a network module (not shown) that functions as a communication unit 24 that transmits and receives information (information on the imaging-area image and detection area E1) to and from the surveillance camera 110 via the network; a display (not shown) that functions as a display unit 21 that displays the image received from the surveillance camera 110; a CPU (not shown) that functions as a designation unit 22 that executes a program stored in the memory and thus designates the detection area E1 based on the received imaging-area image; and a mouse (not shown) that functions as a coordinate input unit (not shown) for inputting coordinates.

As shown in Fig. 1, the alarm 130 alerts the person P who has entered the off-limits area E1a by emitting light such as red light. The alarm 130 is installed in a position that is easily visible for a person P who has entered the off-limits area. As shown in Figs. 2 and 3, the alarm 130 includes: a red light source 131 (light source 31 in Fig. 3); a network module 134 that functions as a reception unit 34 that receives a notification from the surveillance camera 110; and a CPU 132 that executes a program stored in the memory 133, thus functioning as a control unit 32 that controls the light source 131 in accordance with a notification received from the surveillance camera 110 via the network module 134.

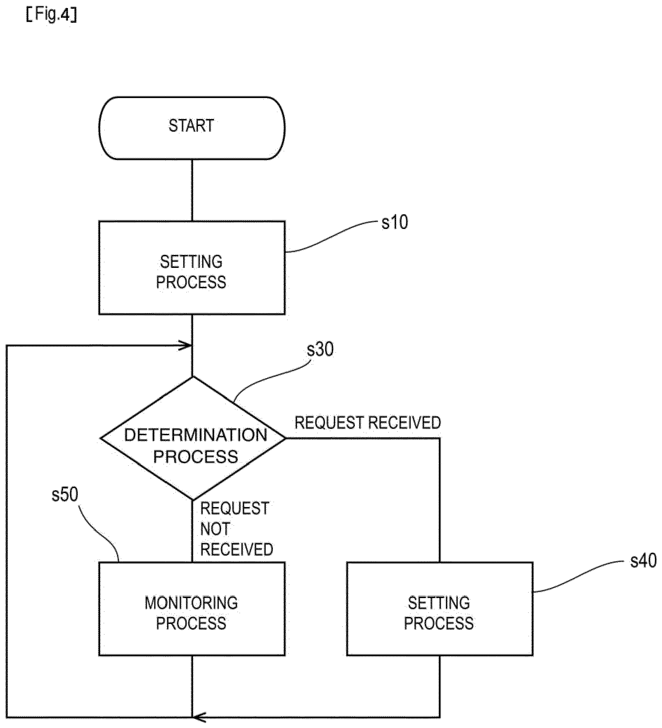

Referring to Figs. 4 to 6, the following describes the operation flow of the alarm system 100 according to the present embodiment. The alarm system 100 first sets a detection area E1 in the imaging area E2, and monitors the set detection area E1 and issues an alarm.

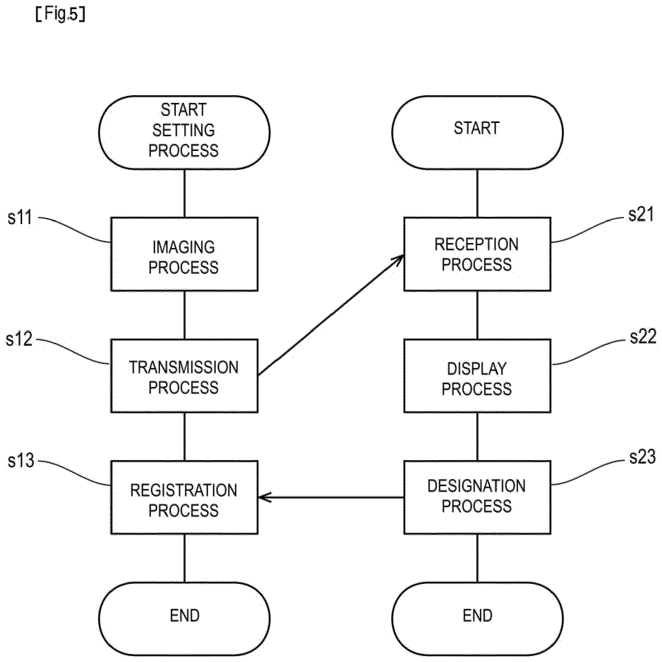

As shown in Fig. 4, the CPU 112 of the surveillance camera 110 executes a program stored in the memory 113, thus performing setting process s10. The setting process s10 is to set the detection area E1, and as shown in Fig. 5, it includes imaging process s11, transmission process s12, and registration process s13.

The imaging process s11 is to take an image of the imaging area E2. In this process, the CPU 112 of the surveillance camera 110 inputs an imaging command to the image sensor 111, and the image sensor 111 takes an image of the imaging area E2 in accordance with the imaging command to generate an imaging-area image. The generated imaging-area image is input to the CPU 112.

The transmission process s12 is to transmit the imaging-area image to the information terminal 120. In this process, the CPU 112 of the surveillance camera 110 controls the network module 114 so as to transmit the image input from the image sensor 111 to the information terminal 120.

The information terminal 120 executes reception process s21, display process s22, and designation process s23. The reception process s21 is to receive the imaging-area image from the surveillance camera 110. In this process, the CPU of the information terminal 120 receives the imaging-area image via the network module. In the display process s22, the CPU of the information terminal 120 displays the imaging-area image on the display.

The designation process s23 is to designate the detection area E1 in the imaging-area image for the surveillance camera 110. The detection area E1 is the area where an object is to be detected. For instance, the detection area E1 is designated in the imaging-area image by an operator operating a mouse on the imaging-area image displayed on the display. Specifically, the CPU of the information terminal 120 acquires click information of the mouse operated by the operator. If it is determined that the mouse was clicked based on the acquired click information, the CPU acquires coordinate values of the mouse at the clicking timing. Thus, the CPU of the information terminal 120 acquires coordinate values each time the mouse is clicked. In this embodiment, the CPU acquires at least three coordinate values. The CPU of the information terminal 120 then converts the acquired plurality of coordinate values into coordinate values in the imaging-area image and transmits these coordinate values to the surveillance camera 110, where the coordinate values are information on the detection area E1.

When the coordinate values are transmitted from the information terminal 120, the surveillance camera 110 executes the registration process s13. The registration process s13 is to register the coordinate values that are information on the detection area E1. In this process, the CPU 112 of the surveillance camera 110 receives the coordinate values via the network module 114 and stores the received coordinate values in the memory 113.

Referring back to Fig. 4, the surveillance camera 110 executes determination process s30 after executing the setting process s10. The determination process s30 is to determine which of the setting process s40 and the monitoring process s50 is to be performed. If the CPU 112 of the surveillance camera 110 has received a setting request from the information terminal 120 (request received), the CPU 112 executes the setting process s40 similar to the above setting process s10, and sets (updates) the detection area E1 in the imaging-area image. If no setting request has been received (request not received), the CPU 112 executes the monitoring process s50 at a predetermined frame rate.

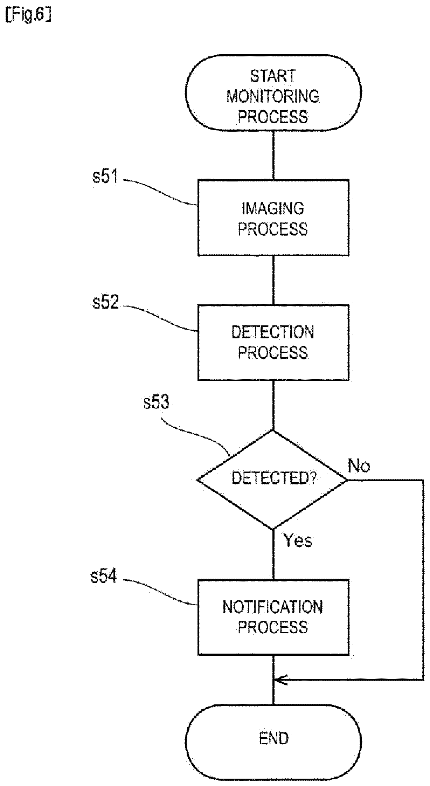

The monitoring process s50 is to monitor the presence of a person P in the detection area E1. As shown in Fig. 6, the monitoring process s50 includes imaging process s51 similar to the imaging process s11 of the setting process s10, detection process s52, and notification process s54. The detection process s52 is to detect an object in the detection area E1 in the imaging-area image generated by the imaging process s51. In this embodiment, an image of the detection area E1 (hereinafter called a "detection-area image") is extracted from the imaging-area image, and a person P is detected in the extracted detection-area image. Note that a detection-area image is extracted based on the information on the detection area set in the setting process s10 and s40. Specifically, a polygon is formed in the coordinate system of the imaging-area image, the polygon having vertices at the plurality of coordinate values stored in the memory 113 in the setting process s10 and s40, and an image included in the polygon is extracted as the detection-area image. For instance, a person P can be detected in the detection-area image as follows: an image pattern including the characteristics of a person P is determined in advance. When the detection-area image includes an image pattern that matches or approximates the determined image pattern, it can be determined that a person P has been detected. In another example, a learned model may be created by machine learning using the images of person P as the training data, and the presence or not of a person P may be determined by inputting the extracted detection-area image into the learned model during the extraction process.

If no person P is detected as a result of the above detection process s52 (s53: No), the monitoring process s50 ends and the above determination process s30 (Fig. 4) is executed. If a person P is detected as a result of the detection process s52 (s53: Yes), the surveillance camera 110 executes the notification process s54. The notification process s54 is to notify that a person P is present in the detection area E1. In this embodiment, the CPU 112 of the surveillance camera 110 transmits an alarm command to the alarm 130. The CPU 112 of the surveillance camera 110 then ends the monitoring process and executes the determination process s30 (Fig. 4).

When the CPU 132 of the alarm 130 receives the alarm command via the network module 134, it causes the red light source 131 to emit light.

The alarm system 100 of the present embodiment enables the detection of a person P not in the entire imaging area E2 imaged by the surveillance camera 110 but in the detection area E1 that is any partially determined area in accordance with the designation from the information terminal 120.

That is the descriptions on one embodiment of the present invention. The present invention is not limited to this embodiment and may include modification examples as follows.

### (Modification Example 1)

In the above embodiment, the CPU 112 of the surveillance camera 110 executes the detection process s52 of an object. The surveillance camera 110 may include a GPU, and the GPU may execute the detection process s52 of an object. That is, the GPU may function as the detection unit 13.

### (Modification Example 2)

The image sensor 111 that the surveillance camera 110 includes in the above embodiment may be a ToF camera sensor. A typical ToF camera sensor is a ToF distance image sensor that irradiates the imaging area E2 with light and detects distance information for each pixel. The presence or not of an object within the detection area E1 may be detected using such a ToF camera. For instance, the body shape and motion of a person P may be recognized based on the distance information for each pixel, whereby the presence of the person P may be detected in the detection area E1.

### (Modification Example 3)

In the above embodiment, one detection area E1 is set in the imaging-area image. A plurality of detection areas E1 may be set in the imaging area E2. In this embodiment, the information terminal 120 executes the designation process s23 multiple times. Each time of the execution, the information terminal 120 transmits a plurality of coordinate values (a group of coordinate values) defining one detection area E1 to the surveillance camera 110. Each time the surveillance camera 110 receives a group of coordinate values, it registers the received group of coordinate values in the memory 113 as the information defining one detection area E1. In the detection process s52, a detection-area image is extracted by extracting a plurality of detection area images, each of which is formed with a group of coordinate values, and then the presence of a person P is detected for each of the extracted detection-area images.

### (Modification Example 4)

The above embodiment may include a plurality of surveillance cameras 110. In this embodiment, each of the surveillance cameras 110 is identified with the IP address, and the information terminal 120 accesses each surveillance camera 110 based on the IP address, so that the detection area E1 is set between the surveillance camera 110 and the information terminal 120.

### (Modification Example 5)

The above embodiment may include a plurality of alarms 130. In this embodiment, each of the alarms 130 is identified with the IP address, and the surveillance camera 110 transmits a notification to each alarm 130 based on the IP address.

### (Modification Example 6)

In the above embodiment, the information terminal 120 and alarm 130 communicate with the surveillance camera 110 via the network. Their communication mode may be wireless communications such as Bluetooth (registered trademark) or IrDA. That is, a Bluetooth module or an IrDA module may be used as the communication units 14, 24 and the reception unit 34. Wired communications such as USB also may be used. That is, a USB module may be used as the communication units 14, 24 and the reception unit 34.

### (Modification Example 7)

In the above embodiment, a personal computer is used for the information terminal. A mobile information terminal such as a smartphone or tablet terminal also may be used. In this embodiment, when the display process s22 is executed, the liquid crystal display of the mobile information terminal functions as the display unit 21 that displays the imaging-area image. When the designation process s23 is executed, the touch panel of the mobile information terminal functions as a coordinate input unit (not shown) that designates the detection area. Instead of the information terminal and mobile information terminal as stated above, a dedicated terminal may be used, which includes a designation unit that designates the detection area for the surveillance camera 110.

### (Modification Example 8)

In the above embodiment, the surveillance camera 110 sends a notification to the alarm 130 in response to a detection of a person P in the detection area E1. The surveillance camera 110 may identify a name tag or other marks that the person P has, and may control whether or not to send a notification. For instance, if a person P is detected, the image of the person P is analyzed. As a result of the analysis, if a name tag is not detected, a notification (alarm command) is sent to the alarm 130. If a name tag is detected as a result of the analysis, the character string displayed on the name tag is recognized. If the recognized character string (name) does not match the character string (name) registered in the memory, a notification (alarm command) is sent to the alarm 130. If the recognized character string (name) matches the character string (name) registered in the memory, the person P is determined to be an authorized person to enter and the notification is not sent to the alarm 130.

In Modification Example 8, the character string of the name tag is recognized. The face of the person P may be analyzed and the person P may be identified based on the facial feature amount. Then, determination is made as to whether or not the identified person P is the person authorized to enter, based on which whether or not to send a notification is controlled.

### (Modification Example 9)

In the above embodiment, the red light source 131 is used as the alarm 130. A speaker may be used as the alarm 130. In this embodiment, when the CPU 120 of the alarm 130 receives a notification from the surveillance camera 110, the CPU 120 may cause the speaker to generate a warning sound or voice to alert the person P. Both the red light source 131 and the speaker may be used.

### (Modification Example 10)

In the above embodiment, the alarm 130 that is communicable with the surveillance camera 110 is used. A display device that is communicable with the surveillance camera 110 may also be provided. This display device includes: a network module that functions as a reception unit; a liquid crystal display that functions as a display unit; and a CPU that functions as a control unit that causes the liquid crystal display to display an image that calls for attention based on the notification received from the surveillance camera 110.

### (Modification Example 11)

The alarm system in the above embodiment may include an RFID reader that is communicable with the surveillance camera 110. The RFID reader is placed near the off-limits area E1a, for example, and reads an RF tag attached to a person P who is permitted to enter the off-limits area E1a. The RF tag stores an ID for identifying the person P who is permitted to enter. When the RFID reader reads the ID from the RF tag that the person P has, the RFID reader then transmits the read ID to the surveillance camera 110. When the surveillance camera 110 receives the ID from the RFID reader, the surveillance camera 110 compares the received ID with an entry permission ID that is pre-registered in a memory or the like. If the IDs match, the surveillance camera 110 does not send a notification to the alarm 130 in the notification process s54. The reader is not limited to an RFID reader, and may be a reader that reads a barcode or QR code (registered trademark) in which an ID is encoded.

### (Modification Example 12)

The system in the above embodiment may include a fingerprint authentication device that is communicable with the surveillance camera 110. The fingerprint authentication device is placed near the off-limits area E1a, for example. The fingerprint authentication device includes: a memory that stores beforehand the feature amount of fingerprint of a person P who is permitted to enter; a fingerprint sensor that detects the feature amount of fingerprint of a person P; and a CPU that compares the detected feature amount of fingerprint with the feature amount stored in the memory to determine whether or not to permit the entry. The CPU transmits the determination result to the surveillance camera 110 via the network module. The surveillance camera 110 receives the determination result from the fingerprint authentication device, and if the determination result indicates that the entry has been permitted, the surveillance camera 110 does not send a notification to the alarm 130 in the notification process s54. If the determination result indicates that the entry has not been permitted, the surveillance camera 110 sends a notification to the alarm 130 in the notification process s54.

In Modification Example 12, the fingerprint authentication device that authenticates fingerprint of a person is used. The authentication device is not limited to the fingerprint authentication device, which may be a vein authentication device or an iris authentication device. That is, the authentication device may include: a sensor that detects a feature amount of a person's body; a memory that stores beforehand a feature amount of the body of a person who is permitted to enter; and a CPU that compares the detected feature amount with the feature amount stored in the memory, thus determining whether or not the person is permitted to enter. The CPU sends the determination result to the surveillance camera 110 via a network module.

### [Usage Example 1]

For instance, the alarm system 100 of the first embodiment may be used to generate an alarm when a person P enters an off-limits area of a truck yard. A truck yard has a truck movement area where trucks move backward for the entry to stop, and a work stage where cargo is unloaded from and loaded onto stopped trucks. The work stage comes with a stage at a high position relative to the ground of the truck movement area so that workers can easily access the truck bed.

In the truck yard, the surveillance camera 110 of the alarm system 100 is installed on the ceiling above the truck movement area, and takes an image of the area including the work stage as an imaging area to generate an imaging-area image.

In the setting process s10 and s40 of this alarm system 100, the information terminal 120 designates, as the detection area, the area on the work stage in the imaging-area image received from the surveillance camera 110. In the monitoring process s50, the surveillance camera 110 extracts the detection-area image (image on the work stage) and detects the presence of a person P in the extracted detection-area image.

An alarm 130 is installed on the work stage of the truck yard. If a person P is detected on the work stage by the surveillance camera 110, the alarm 130 receives a notification and causes a red light source 131 to emit light to issue an alarm to the person P. In this way, an alarm can be issued to the person P who has entered the work stage, which prevents the person from falling off the work stage.

The transmission of a notification to the alarm 130 may be interrupted if other conditions different from the detection of person P are met. For instance, a symbol such as a one-dimensional code or a two-dimensional code may be placed in the imaging area of the truck yard at a position where the symbol is hidden by a truck that has entered the truck movement area (and not included in the imaging-area image).

Such a symbol is imaged by the image sensor 111 of the surveillance camera 110 when no truck is stopped at the truck yard, so that the imaging-area image includes the symbol. In the monitoring process s50, when the CPU 112 of the surveillance camera 110 acquires an imaging-area image from the image sensor 111, the CPU 112 detects the symbol in the image, thus determining that no truck is stopped at the truck yard. After this determination, if the surveillance camera 110 detects the presence of a person P in the detection area (on the work stage), it transmits a notification to the alarm 130 and causes the alarm 130 to issue an alarm.

When a truck is stopped at the truck yard, the symbol is hidden by the truck. This means that the imaging-area image generated by the image sensor 111 of the surveillance camera 110 does not include the symbol. In the monitoring process s50, the CPU 112 of the surveillance camera 110 determines that loading/unloading work is being performed with the stopped truck because no symbol is detected in the imaging-area image acquired from the image sensor 111. Thus, the CPU 112 ends the monitoring process s50 without executing the detection process s52 of an object. That is, no notification will be sent to the alarm 130 while the truck is stopped. The symbol is preferably placed in the detection area.

### [Usage Example 2]

For instance, the alarm system 100 of the first embodiment may be used to generate an alarm when a person P enters the area of Braille blocks on a station platform. Specifically, the surveillance camera 110 of the alarm system 100 is installed on the ceiling of the platform and takes an image of the entire platform that is the imaging area to generate an image of the imaging area.

In the setting process s10 and s40 of this alarm system 100, the information terminal 120 designates, as the detection area, the area closer to the edge of the platform than the Braille blocks in the imaging-area image received from the surveillance camera 110. In the monitoring process s50, the surveillance camera 110 extracts the detection-area image (image of the area closer to the edge of the platform than the Braille blocks) and detects the presence of a person P in the extracted detection-area image. If a person P is detected in the detection-area image, the CPU 112 of the surveillance camera 110 transmits a notification to the alarm 130 and causes the alarm 130 to issue an alarm.

Note that in the monitoring process s50, a detection process for train is executed prior to the detection process s52 for person. The train detection process detects a train in the imaging-area image, and if an image pattern matching or similar to predetermined characteristics of a train exists in the imaging-area image, this means a detection of train. In this case, passengers will get on and off the train that is stopped at the platform. Then, the monitoring process s50 ends without the execution of the person detection process s52.

### [Usage Example 3]

For instance, the alarm system 100 of the first embodiment may be used in a hospital to generate an alarm when an inpatient enters a doorway at night or other time periods when inpatients are not allowed to leave the hospital. Specifically, the surveillance camera 110 of the alarm system 100 is installed on the ceiling of the doorway and takes an image around the doorway that is the imaging area to generate an image of the imaging area.

In the setting process s10 and s40 of this alarm system 100, the information terminal 120 designates, as the detection area, the area near the doorway in the imaging-area image received from the surveillance camera 110. In the detection process s52 of the monitoring process s50, the detection area (image of the place near the doorway) is extracted from the imaging-area image, and the presence of a person P is detected in the extracted detection-area image. If a person P is detected in the detection-area image, the CPU 112 of the surveillance camera 110 transmits a notification to the alarm 130 and causes the alarm 130 to issue an alarm.

The alarm system in this example may include an automatic door placed at the doorway to be communicable with the surveillance camera 110. The automatic door includes a network module that functions as a reception unit of letting the surveillance camera 110 receive a notification, and a CPU that controls the door to a closed state in response to the reception of a notification. This allows the system to prevent inpatients from leaving the hospital during the curfew hours.

In the monitoring process of this example, if a person P is detected in the detection area, the process further may identify between inpatients and doctors or nurses, and may issue an alarm only when an inpatient is detected. For instance, the process may identify an inpatient based on the difference between the inpatient's clothes and the clothes of doctors or nurses.

The installation place is not limited to the doorway, and the alarm system 100 may be installed in the hallway of the hospital. Specifically, the alarm system 100 is installed in a hallway leading to an area where only hospital personnel are permitted to enter, and the surveillance camera 110 is installed on the ceiling of this hallway. This surveillance camera 110 has a part of the hallway that is set as the detection area by the information terminal 120, and detects a person P who has entered the part of the hallway. If the detected person P is identified as an inpatient, the surveillance camera 110 sends a notification to the alarm 130, and the alarm 130 generates an alarm.

A gate device communicable with the surveillance camera 110 may also be installed in the hallway mentioned above. The gate device includes a network module that functions as a reception unit that receives a notification from the surveillance camera 110, and a CPU that controls an opening/closing bar that opens and closes the hallway to the closed state when a notification is received. This gate device is placed in the hallway leading to the area where the entry of unauthorized persons is prohibited, which physically prevents patients from accidentally entering the area.

### [Usage Example 4]

The alarm system 100 of the first embodiment may be used with a vehicle. Specifically, the surveillance camera 120 of the alarm system 110 may have the rear of a vehicle, such as a forklift, set as the imaging area and the area near the rear of the vehicle set as the detection area.

That is the descriptions on the present invention. The present invention is not limited to the above embodiment, modification examples and usage examples, and may be modified in various ways.

### Reference Signs List

- 13: Detection unit
- 14: Communication unit (transmission unit)
- 22: Designation unit
- 100: Surveillance system
- 110: Surveillance camera (camera)
- 120: Information terminal (terminal)
- 130: Alarm (another device)
- E1: Detection area
- E2: Imaging area

## Claims

1. A system comprising: a camera; and a terminal that is communicable with the camera,
the terminal including:
a designation unit configured to designate a detection area, in which an object is to be detected, for the camera in an image acquired from the camera,
the camera including:
a detection unit configured to detect an object in the detection area in a generated image; and
a transmission unit configured to transmit a notification indicating a detection of the object to another device.

2. The system according to claim 1, wherein the other device operates in accordance with a notification received from the camera.

3. The system according to claim 1 or claim 2, wherein when another condition different from a detection of the object is met, the camera does not send the notification.

4. A camera comprising:
an imaging unit that generates an image;
a setting unit having a detection area, in which an object is to be detected, in the generated image, the detection area being set by a communicable terminal;
a detection unit configured to detect an object in the detection area in the generated image; and
a transmission unit configured to transmit a notification indicating a detection of the object to another device.
